# EUROPÄISCHE PATENTSCHRIFT

(11) **EP 1 044 997 B1**
(45) Veröffentlichungstag und Bekanntmachung des Hinweises auf die Patenterteilung: **26.03.2003**
(21) Anmeldenummer: 00106610.9
(22) Anmeldetag: 28.03.2000
(51) Int. Cl.: C08G 12/42, C10G 33/04, B01D 17/04

(54) **Aromatische Aldehydharze und ihre Verwendung als Emulsionsspalter**
Aromatic aldehyde resins and their use as demulsifier
Résines aldéhydes aromatiques et leur utilisation comme désémulsifiant

(30) Priorität: 15.04.1999 DE 19916945
(43) Veröffentlichungstag der Anmeldung: 18.10.2000
(73) Patentinhaber: Clariant GmbH, 65929 Frankfurt am Main (DE)
(72) Erfinder: Holtrup, Frank, Dr., 84504 Burgkirchen (DE); Schönstetter, Tanja, 84508 Burgkirchen (DE); Grundner, Heidi, 84518 Garching/Alz (DE)

(56) Entgegenhaltungen:
- EP-A- 0 078 975
- DE-B- 1 060 140
- US-A- 3 830 850

## Beschreibung

Die vorliegende Erfindung betrifft Harze, herstellbar aus aromatischen Verbindungen durch Kondensation mit Aldehyden, sowie ihre Verwendung zur Spaltung von Wasser-Öl-Emulsionen, insbesondere in der Rohölgewinnung.

Rohöl fällt bei seiner Förderung als Emulsion mit Wasser an. Vor der Weiterverarbeitung des Rohöls müssen diese Rohölemulsionen in den Öl- und den Wasseranteil gespalten werden. Hierzu bedient man sich im allgemeinen sogenannter Erdölspalter. Es handelt sich bei Erdölspaltern um grenzflächenaktive Verbindungen, die in der Lage sind, innerhalb kurzer Zeit die erforderliche Trennung der Emulsionsbestandteile zu bewirken.

Als Erdölspalter werden unter anderem Alkylphenol-Aldehydharze verwendet, die beispielsweise in US-4 032 514 offenbart sind. Diese Harze sind aus der Kondensation eines p-Alkylphenols mit einem Aldehyd, meistens Formaldehyd, erhältlich. Die Harze werden oft in alkoxylierter Form verwendet, wie es beispielsweise in DE-A-24 45 873 offenbart ist. Hierzu werden die freien phenolischen OH-Gruppen mit einem Alkylenoxid umgesetzt.

in jüngerer Zeit kamen die Alkylphenol-Aldehydharze jedoch wegen ihres kaum vermeidbaren Gehalts an freien Alkylphenolen und Alkylphenolalkoxylaten in die Kritik. Nach derzeitigem Kenntnisstand ist nicht auszuschließen, daß Alkylphenole und Alkylphenolalkoxylate östrogene Wirkung aufweisen, wodurch eine Gefährdung der Tierwelt möglich wäre.

Es ergab sich somit die Aufgabe, neue Erdölspalter aufzufinden, die den Alkylphenol-Aldehydharzen in der Wirkung wenigstens vergleichbar sind, die aber keine Alkylphenole oder -alkoxylate enthalten, und daher nicht im Verdacht stehen, östrogen zu wirken.

Überraschenderweise wurde gefunden, daß Harze, die aus N-substituierten Alkylaminobenzolen herstellbar sind, eine ausgezeichnete Wirkung als Erdölspalter zeigen, und nicht im Verdacht stehen, hormonartig zu wirken.

Gegenstand der Erfindung sind daher Harze, erhältlich aus Verbindungen der Formel 1 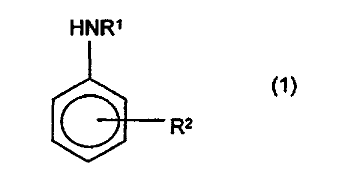 in der die Substituenten R² und HNR¹ zueinander in ortho-, meta- oder para-Stellung stehen können, und
- R¹: die gleiche Bedeutung wie R² , oder die Bedeutung -COR² hat, wobei R¹ von R² unabhängig ist,
- R²: für C₁-C₃₀-Alkyl, C₂-C₃₀-Alkenyl, C₆-C₁₈-Aryl, C₇-C₃₀-Alkylaryl steht,
durch die in beliebiger Reihenfolge ausführbaren Schritte
A) Umsetzung mit einem Aldehyd der Formel 2

   R³ - CHO (2),

   worin R³ die Bedeutung H, C₁-C₃₀-Alkyl, C₂-C₃₀-Alkenyl, C₆-C₁₈-Aryl oder C₇-C₃₀-Alkylaryl hat, und
B) Alkoxylierung mit einem C₂-C₄-Alkylenoxid im molaren Überschuß, so daß das entstehende Alkoxylat einen Alkoxylierungsgrad von 1 bis 100 Alkylenoxideinheiten pro -NH-Gruppe aufweist,
und das Harz ein Molekulargewicht von 250 bis 100.000 Einheiten aufweist.

Bei den Verbindungen der Formel (1) handelt es sich im wesentlichen um chemisch einheitliche Verbindungen, die nicht in Mischungen miteinander verwendet werden. Der Begriff "im wesentlichen" bedeutet hier, daß zur Herstellung der erfindungsgemäßen Harze Verbindungen der Formel (1) in handelsüblicher Reinheit verwendet werden. Anteile weiterer unter die Formel (1) fallender Verbindungen können also in den Harzen enthalten sein, es sei insbesondere auf nicht vollständig abgetrennte Anteile der jeweils beiden anderen aromatischen Substitutionsisomeren hingewiesen. Ähnliches gilt für das zur Kondensation verwendete Aldehyd. Auch dieses ist im wesentlichen als einheitlicher Stoff einzusetzen, wobei Aldehyde handelsüblicher Reinheit zur Verwendung kommen.

R¹ steht vorzugsweise für einen -COR²-Rest, in dem R² die Bedeutung C₁-C₁₈-, insbesondere C₂-C₁₄-, speziell C₄-C₁₂-Alkyl oder -Alkenyl hat.

Steht einer der Reste R¹, R² oder R³ für einen Alkenyl- oder Alkylrest, so beträgt dessen Kettenlänge vorzugsweise 2 bis 24, besonders bevorzugt 4 bis 22, speziell 4 bis 18 Kohlenstoffatome. Alkyl- und Alkenylreste können sowohl linear als auch verzweigt sein.

Steht einer der Reste R¹, R² oder R³ für einen Alkylarylrest, so bedeutet Alkylaryl vorzugsweise einen über den aromatischen Kern gebundenen Rest, dessen aromatischer Kern vorzugsweise 6 Kohlenstoffatome umfaßt, und der in o-, m- oder p-Stellung zur oben genannten Bindung einen Alkylrest von vorzugsweise 1 bis 18, besonders bevorzugt 4 bis 16, insbesondere 6 bis 12 Kohlenstoffatome Kettenlänge trägt.

Führt man zuerst Schritt A und dann Schritt B aus, dann werden die Verbindungen der Formel 1 mit Aldehyden der Formel 2 zu einem Harz umgesetzt Bei den Aldehyden der Formel 2 handelt es sich vorzugsweise um solche, bei denen R⁸ für H oder einen C₁-C₆-Alkylrest, insbesondere H oder einen C₁-C₄-Alkylrest steht. In einer besonders bevorzugten Ausführungsform steht R⁸ für Wasserstoff. Die Kondensation kann sowohl sauer als auch basisch katalysiert werden. Die aus der Kondensation erhaltenen Harze werden dann mit einem C₂-C₄-Alkylenoxid, vorzugsweise Ethylenoxid oder Propylenoxid alkoxyliert. Das Alkoxylierungsmittel wird im molaren Überschuß angewandt. Die Alkoxylierung erfolgt an den freien NH-Gruppen des erhaltenen Harzes. Es wird so viel Alkylenoxid eingesetzt, daß der mittlere Alkoxylierungsgrad zwischen 1 und 100 Alkylenoxideinheiten pro freier NH-Gruppe liegt. Unter mittlerem Alkoxylierungsgrad wird hier die durchschnittliche Zahl von Alkoxyeinheiten verstanden, die an jede freie NH-Gruppe angelagert wird. Er liegt vorzugsweise bei 1 bis 70, insbesondere bei 2 bis 50.

Die Schritte A) (Kondensation) und B) (Alkoxylierung) werden vorzugsweise in dieser Reihenfolge durchgeführt. Es ist jedoch auch möglich, sie in umgekehrter Reihenfolge durchzuführen. In diesem Fall werden die Verbindungen der Formel 1 zunächst alkoxyliert, und anschließend zum Harz umgesetzt

Das nach Kondensation und Alkoxylierung erhaltene Harz hat vorzugsweise ein Molekulargewicht von 500 bis 50.000 Einheiten, insbesondere von 1000 bis 10.000 Einheiten.

Bevorzugte Harze, die nach dem beschriebenen Verfahren erhältlich sind, haben folgende Strukturen: 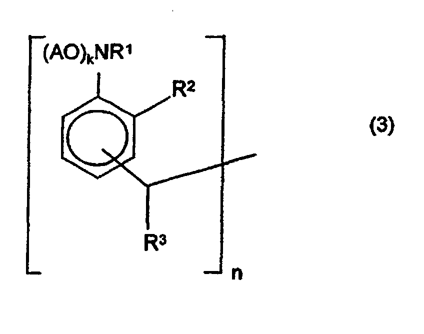 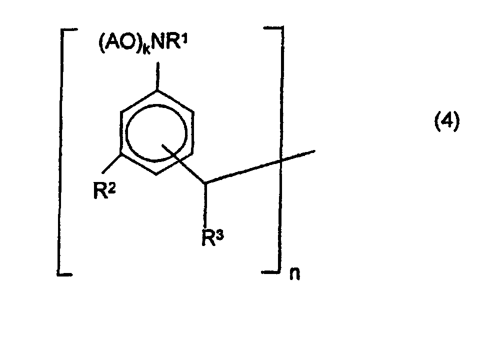 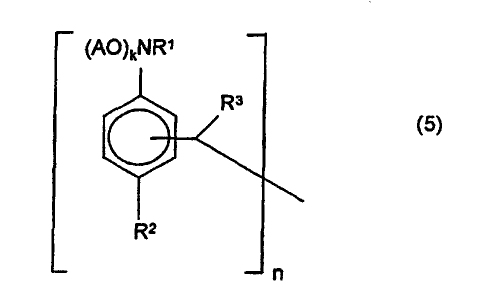 (AO)ₖNR¹ steht für den alkoxylierten HNR¹-Rest, worin AO die Alkylenoxideinheit darstellt, und k der Alkoxylierungsgrad ist Die Verbrückung der aromatischen Ringe über das den Rest R³ tragende Kohlenstoffatom kann an jeder der freien Positionen der aromatischen Ringe ansetzen. n steht für den Kondensationsgrad des Harzes. n ist vorzugsweise eine Zahl von 2 bis etwa 100, insbesondere 3 bis 50, besonders bevorzugt 4 bis 30, speziell 4 bis 10.

Ein weiterer Gegenstand der Erfindung ist die Verwendung der erfindungsgemäßen Harze zum Spalten von Öl-Wasser-Emulsionen.

Zur Verwendung als Erdölspalter werden die Harze den Wasser-Öl-Emulsionen zugesetzt, was vorzugsweise in Lösung geschieht. Als Lösungsmittel werden paraffinische oder aromatische Lösungsmittel bevorzugt. Die Mengen betragen 0,0001 bis 5, vorzugsweise 0,0005 bis 2, insbesondere 0,0008 bis 1 und speziell 0,001 bis 0,1 Gew.-% Harz bezogen auf den Ölgehalt der zu spaltenden Emulsion.

Die Herstellung der erfindungsgemäßen Verbindungen erfolgt im allgemeinen durch sauer oder alkalisch katalysierte Kondensation der Verbindungen der Formel 1 mit den Aldehyden der Formel 6, wobei die Alkoxylierung der Kondensation vorausgehen oder auf sie folgen kann. Die Reaktionstemperatur liegt im allgemeinen zwischen 50 und 170°C, vorzugsweise bei 120 bis 165°C. Die Reaktion wird normalerweise bei Atmosphärendruck durchgeführt. Als katalysierende Säuren sind beispielsweise HCI, H₂SO₄, Sulfonsäuren oder H₃PO₄ zu nennen, als Basen NaOH, KOH oder Triethylamin, die in Mengen von 0,1 bis 50 Gew.-%, bezogen auf das Gewicht des Reaktionsgemisches verwendet werden. Die Kondensation nimmt im allgemeinen 30 min bis 6 Stunden in Anspruch. Das molare Verhältnis zwischen Aldehyd und aromatischer Verbindung beträgt im allgemeinen von 0,5:1 bis 4 : 1, vorzugsweise von 0,8 : 1 bis 1,8:1.

Die Alkoxylierung erfolgt, wie im Stand der Technik bekannt, durch Umsetzung der Harze mit einem Alkylenoxid unter erhöhtem Druck von im allgemeinen 1,1 bis 20 bar bei Temperaturen von 50 bis 200 °C.

### Beispiele

### Beispiel 1

### Umsetzung von p-Butyl-N-methylanilin mit Formaldehyd (saure Katalyse)

In einem 500 ml Vierhalskolben mit Kontaktthermometer, Rührer, Tropftrichter und Wasserauskreiser wurden 60,0 g p-Butyl-N-methylanilin (M = 163), 60 ml eines aromatischen Lösungsmittels und 0,6 g Alkylbenzolsulfonsäure (0,5 mol%) vorgelegt. Unter Rühren und Stickstoffspülung wurde das Reaktionsgemisch auf 120°C erhitzt und bei dieser Temperatur langsam 31,6 g wäßrige Formaldehyd-Lösung (35%ig) zugetropft. Nach beendeter Zugabe wurde eine Stunde bei 120°C und eine Stunde bei 165 °C gerührt und das entstehende Reaktionswasser über den Auskreiser abgenommen. Das Produkt wurde am Rotationsverdampfer zur Trockne einrotiert (Ausbeute:54,2g) und über GPC analysiert.

### Beispiel 2

### Umsetzung von p-Butyl-N-methylanilin mit Formaldehyd (alkalische Katalyse)

In einem 500 ml Vierhaiskolben mit Kontaktthermometer, Rührer, Tropftrichter und Wasserauskreiser wurden 54,0 g p-Butyl-N-methylanilin (M = 163), 50 g eines aromatischen Lösungsmittels und 0,8 g 40%ige Kalilauge vorgelegt. Unter Rühren und Stickstoffspülung wurde das Reaktionsgemisch auf 120 °C erhitzt und bei dieser Temperatur langsam 28,5 g wäßrige Formaldehyd-Lösung (35%ig) zudosiert. Nach beendeter Zugabe wurde eine Stunde bei 120 °C und nochmals eine Stunde bei 165°C gerührt und das entstehende Reaktionswasser über den Auskreiser abgenommen. Das Produkt wurde am Rotationsverdampfer zur Trockne einrotiert (Ausbeute:52,0g) und über GPC analysiert.

### Beispiel 3

### Umsetzung von p-Dodecyl-N-acetylanilin mit Formaldehyd

In einem 500 ml Rührkolben mit Kontaktthermometer, Rührer, Tropftrichter und Wasserauskreiser wurden 97,0 g p-Dodecyl-N-acetylanilin (M = 303)und 0,5 g Alkylbenzolsulfonsäure (0,5 mol%) in 100 g eines aromatischen Lösungsmittels gelöst. Unter Rühren und Stickstoffspülung wurde das Reaktionsgemisch auf 120°C erhitzt. Bei 120 °C wurden 27,4 g Formaldehyd-Lösung (35%ig in Wasser) langsam zugetropft. Nach beendeter Zugabe ließ man eine Stunde bei 120°C und eine Stunde bei 165°C nachreagieren. Das dabei entstehende Reaktionswasser wurde über den Auskreiser abgenommen. Das Produkt wurde am Rotationsverdampfer zur Trockne einrotiert (Ausbeute:92,0g) und über GPC analysiert.

### Beispiel 4

### Umsetzung von p- Hexyl-N-tritylanilin mit Formaldehyd (alkalische Katalyse)

In einen 500 ml Rührkolben mit Kontaktthermometer, Rührer, Tropftrichter und Wasserauskreiser wurden 80,0 g p-Hexyl-N-tritylanilin (M = 419, Trityl = Triphenylmethyl) und 1,1 g 40%ige Kalilauge in 80 g eines aromatischen Lösungsmittels vorgelegt und gelöst. Anschließend wurde unter Rühren und Stickstoffspülung das Reaktionsgemisch auf 120°C erhitzt und bei dieser Temperatur langsam 16,4 g Formaldehyd-Lösung (35%ig in Wasser) zugetropft. Nach beendeter Zugabe ließ man eine Stunde bei 120°C und eine Stunde bei 165°C nachreagieren. Das dabei entstehende Reaktionswasser wurde über den Auskreiser abgenommen. Das Produkt wurde am Rotationsverdampfer zur Trockne einrotiert (Ausbeute:66,0 g) und über GPC analysiert.

### Oxalkylierung der Aromat-Aldehyd-Harze

### Ethylenoxid

Die oben beschriebenen Harze wurden in einen 1l-Glasautoklaven eingebracht und der Druck im Autoklaven mit Stickstoff auf ca. 0,2 bar Überdruck eingestellt Es wurde langsam auf 140°C aufgeheizt und nach Erreichen dieser Temperatur der Druck erneut auf 0,2 bar Überdruck eingestellt.
Danach wurde bei 140°C die gewünschte Menge EO zudosiert, wobei der Druck 4,5 bar nicht übersteigen sollte. Nach beendeter EO-Zugabe ließ man noch 30 Minuten bei 140°C nachreagieren.

### Propylenoxid

Die oben beschriebenen Harze wurden in einen 1I-Glasautoklaven eingebracht und der Druck im Autoklaven mit Stickstoff auf ca. 0,2 bar Überdruck eingestellt. Es wurde langsam auf 130°C aufgeheizt und nach Erreichen dieser Temperatur der Druck erneut auf 0,2 bar Überdruck eingestellt.
Danach wurde bei 130°C die gewünschte Menge PO zudosiert, wobei der Druck 4,0 bar nicht übersteigen sollte. Nach beendeter PO-Zugabe ließ man noch 30 Minuten bei 130°C nachreagieren.

### Bestimmung der Spaltwirksamkeit von Erdölemulsionsspaltem

Zur Bestimmung der Wirksamkeit eines Emulsionsspalters wurde die Wasserabscheidung aus einer Rohölemulsion pro Zeit sowie die Entwässerung und Entsalzung des Öls bestimmt. Dazu wurden in Spaltergläser (konisch zulaufende, verschraubbare, graduierte Glasflaschen) jeweils 100 ml der Rohölemulsion eingefüllt, jeweils eine definierte Menge des Emulsionsspalters mit einer Mikropipette knapp unter die Oberfläche der Ölemulsion zudosiert und der Spalter durch intensives Schütteln in die Emulsion eingemischt. Danach wurden die Spaltergläser in ein Temperierbad (30 °C und 50 °C) gestellt und die Wasserabscheidung verfolgt.

Während und nach beendeter Emulsionsspaltung wurden Proben von dem Öl aus dem oberen Teil des Spalterglases (sog. Topöl) entnommen und der Wassergehalt nach Karl Fischer und der Salzgehalt konduktometrisch bestimmt. Auf diese Weise konnten die neuen Spalter nach Wasserabscheidung sowie Entwässerung und Entsalzung des Öls beurteilt werden.

### Spaltwirkung der beschriebenen Spalter

Ursprung der Rohölemulsion: Holzkirchen Sonde 3, Deutschland
Wassergehalt der Emulsion: 46 %
Salzgehalt der Emulsion: 5 %
Demulgiertemperatur: 50°C
Dosiermenge: 100 ppm

| Wasserabscheidung [ml] pro Zeit [min] | 5 | 10 | 20 | 30 | 45 | 60 | 90 | 120 | 180 | Wasser im Topöl [%] | Salz im Topöl [ppm] |
|---|---|---|---|---|---|---|---|---|---|---|---|
| Beispiel 1 | 1 | 3 | 17 | 30 | 37 | 41 | 43 | 45 | 46 | 0,55 | 110 |
| Beispiel 2 | 1 | 3 | 15 | 27 | 35 | 39 | 41 | 44 | 46 | 0,60 | 117 |
| Beispiel 3 | 2 | 5 | 26 | 31 | 36 | 40 | 44 | 46 | 46 | 0,44 | 102 |
| Beispiel 4 | 2 | 7 | 30 | 35 | 40 | 44 | 46 | 46 | 46 | 0,37 | 89 |
| Blindwert | 0 | 0 | 0 | 0 | 0 | 0 | 0 | 0 | 0 | n. m. | >10000 |

## Patentansprüche

1. Harze, erhältlich aus Verbindungen der Formel 1 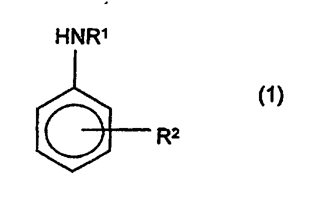 in der die Substituenten R² und HNR¹ zueinander in ortho-, meta- oder para-Stellung stehen können, und
R¹ die gleiche Bedeutung wie R², oder die Bedeutung -COR² hat, wobei R¹ von R² unabhängig ist,
R² für C₁-C₃₀-Alkyl, C₂-C₃₀-Alkenyl, C₆-C₁₈-Aryl, C₇-C₃₀-Alkylaryl steht,
durch die in beliebiger Reihenfolge ausführbaren Schritte
A) Umsetzung mit einem Aldehyd der Formel 2
R³-CHO (2),
worin R³ die Bedeutung H, C₁-C₃₀-Alkyl, C₂-C₃₀-Alkenyl, C₆-C₁₈-Aryl oder C₇-C₃₀-Alkylaryl hat, und
B) Alkoxylierung mit einem C₂-C₄-Alkylenoxid im molaren Überschuß, so daß das entstehende Alkoxylat einen Alkoxylierungsgrad von 1 bis 100 Alkylenoxideinheiten pro -NH-Gruppe aufweist,
und das Harz ein Molekulargewicht von 250 bis 100.000 Einheiten aufweist.

2. Harze nach Anspruch 1, **dadurch gekennzeichnet, daß** sie unter Verwendung von Formaldehyd kondensiert wurden.

3. Harze nach Anspruch 1 und/oder 2, **dadurch gekennzeichnet, daß** sie im Mittel mit 2 bis 50 Ethoxyeinheiten pro freier NH-Gruppe ethoxyliert sind.

4. Verwendung von Harzen nach einem oder mehreren der Ansprüche 1 bis 3 zum Spalten von Öl-Wasser-Emulsionen.

## Claims

1. A resin obtainable from a compound of the formula 1 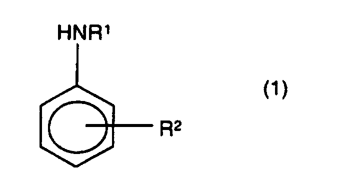 in which the substituents R2 and HNR1 can be in the ortho, meta or para position relative to one another, and
R1 has the same meaning as R2, or has the meaning -COR2, where R1 is independent of R2,
R2 is C1-C30-alkyl, C2-C30-alkenyl, C6-C18-aryl, C7-C30-alkylaryl,
by the steps, which can be carried out in any order, of
A) reaction with an aldehyde of the formula 2
R3 - CHO (2),
wherein R3 is H, C1-C30-alkyl, C2-C30-alkenyl, C6-C18-aryl or C7-C30-alkylaryl, and
B) alkoxylation with a C2-C4-alkylene oxide in molar excess, such that the resulting alkoxylate has a degree of alkoxylation of from 1 to 100 alkylene oxide units per -NH group,
and the resin has a molecular weight of from 250 to 100,000 units.

2. The resin as claimed in claim 1, which has been condensed using formaldehyde.

3. The resin as claimed in claim 1 and/or 2, which has been ethoxylated on average with from 2 to 50 ethoxy units per free NH group.

4. The use of a resin as claimed in one or more of claims 1 to 3 for demulsifying oil-water emulsions.

## Revendications

1. Résine, que l'on peut obtenir à partir de composés de formule 1 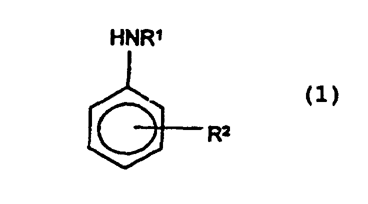 dans laquelle les substituants R² et HNR¹ peuvent se situer l'un par rapport à l'autre en position ortho, méta ou para, et
R¹ a la même signification que R², ou a la signification -COR², dans laquelle R¹ est indépendant de R²,
R² représente un groupe alkyle en C₁ à C₃₀, alcényle en C₂ à C₃₀, aryle en C₆ à C₁₈, alkylaryle en C₇ à C₃₀,
par les étapes réalisables dans un ordre quelconque.
A) Réaction avec un aldéhyde de formule 2
R³ ― CHO (2),
dans laquelle R³ a la signification H, alkyle en C₁ à C₃₀, alcényle en C₂ à C₃₀, aryle en C₆ à C₁₈ ou alkylaryle en C₇ à C_{30,} et
B) alcoxylation avec un oxyde d'alkylène en C₂ à C₄ en excès molaire, de sorte que l'alcoxylate produit présente un degré d'alcoxylation de 1 à 30 unités d'oxyde d'alkylène par groupe NH,
et que la résine présente une masse moléculaire de 250 à 100 000 unités.

2. Résines selon la revendication 1, **caractérisées en ce qu'**elles ont été condensées en utilisant du formaldéhyde.

3. Résines selon la revendication 1 et/ou 2, **caractérisées en ce qu'**elles sont éthoxylées au moyen de 2 à 50 motifs éthoxy par groupe NH libre.

4. Utilisation de résines selon une ou plusieurs des revendications 1 à 3 pour la dissociation d'émulsions huile-eau.
